# EUROPEAN PATENT APPLICATION

(11) **EP 4 760 358 A1**
(43) Date of publication of application: **17.06.2026**
(21) Application number: 24851759.1
(22) Date of filing: 02.08.2024
(51) Int. Cl.: G02B 1/04, C08G 75/08

(54) **OPTICAL MATERIAL COMPOSITION AND OPTICAL MATERIAL USING SAME**

(30) Priority: 07.08.2023 JP 2023128287
(71) Applicant: MITSUBISHI GAS CHEMICAL COMPANY, INC., Chiyoda-ku Tokyo 100-8324 (JP)
(72) Inventor: SADO Mariko, Tokyo 125-8601 (JP); TAKEMURA Kouhei, Tokyo 125-8601 (JP)
(74) Representative: Müller-Boré & Partner Patentanwälte PartG mbB
(86) International application number: PCT/JP2024/027646
(87) International publication number: WO 2025/033334

(57) **Abstract**

An optical material having excellent heat resistance can be obtained, and a homogeneous composition for optical materials can be easily provided without performing a preliminary polymerization reaction. A composition for optical materials comprising: (a) episulfide compound, (b) sulfur, and (c) cyclic compound represented by the following formula (1). A mass ratio (b/c) of the (b) sulfur to the (c) cyclic compound is 8 or less. A content of the (c) cyclic compound is less than 10 parts by mass with respect to 100 parts by mass in total of the (a) episulfide compound, the (b) sulfur, and the (c) cyclic compound. (In the formula (1), X each independently represents S, Se, or Te, and a to f are each independently 0 to 3, with the proviso that 8 ≥ (a+c+e) ≥1, 8 ≥(b+d+f) ≥2, and (b+d+f) ≥(a+c+e) are satisfied.)

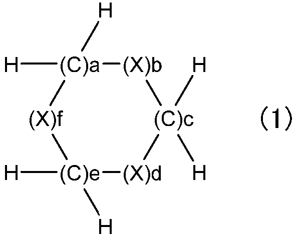

## Description

### Technical Field

The present invention relates to a composition for optical materials, an optical material using the same, and the like.

### Background Art

Plastic materials are widely used in optical materials, particularly eyeglass lenses, due to their light weight, high toughness, and ease of dyeing. Optical materials are required to have physical properties such as low specific gravity, high transparency, high heat resistance, and high strength, as well as optical properties such as high refractive index and high Abbe's number.

Conventionally, methods using polyepisulfide compounds have been investigated to produce optical materials excellent in physical properties and optical properties. For example, Patent Literature 1 describes the invention according to the composition for optical materials, which contains sulfur and a cyclic compound containing a specific atom (sulfur, selenium, or tellurium) together with an episulfide compound.

Patent Literature 1 describes that optical materials having a high refractive index of 1.7 or more are obtained by using polyepisulfide compounds. According to the composition for optical materials described in Patent Literature 1, it is described that the obtained optical material is excellent in heat resistance and releasability.

### Citation List

### Patent Literature

Patent Literature 1: International publication No. WO2016/204080

### Summary of Invention

### Technical Problem

However, for example, the optical material obtained from the composition for optical materials described in Patent Literature 1 had room for improvement in terms of heat resistance.

Furthermore, since sulfur and the cyclic compound are solid at low temperatures (e.g., 40°C or less), when the raw materials are simply mixed at low temperatures, the obtained composition for optical materials contains solid components and become heterogeneous, which results in insufficient performance of the obtained optical material. Therefore, conventionally, in order to produce a homogeneous composition for optical materials, the solubility of the solid components is increased by performing a preliminary polymerization reaction using the solid components as raw materials (e.g., a polymerization reaction of sulfur and an episulfide compound) during the production step of the composition for optical materials. However, the preliminary polymerization reaction requires certain considerations, such as the need to confirm the degree of the progress of the curing reaction (polymerization reaction) in-line, making the production steps complicated.

Therefore, according to the present invention, an optical material having excellent heat resistance can be obtained, and a homogeneous composition for optical materials can be easily provided without performing a preliminary polymerization reaction.

### Solution to Problem

That is, the present invention is, for example, as follows.
[1] A composition for optical materials comprising:
   (a) episulfide compound, (b) sulfur, and (c) cyclic compound represented by the following formula (1): 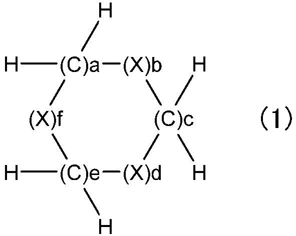 wherein, in the formula (1),
      X each independently represents S, Se, or Te, and
      a to f are each independently 0 to 3,
      with the proviso that 8 ≥ (a+c+e) ≥1, 8 ≥(b+d+f) ≥2, and (b+d+f) ≥(a+c+e) are satisfied,
      wherein a mass ratio (b/c) of the (b) sulfur to the (c) cyclic compound is 8 or less, and
      a content of the (c) cyclic compound is less than 10 parts by mass with respect to 100 parts by mass in total of the (a) episulfide compound, the (b) sulfur, and the (c) cyclic compound.
[2] The composition for optical materials according to [1], wherein a total content of the (b) sulfur and the (c) cyclic compound is 9 to 30 parts by mass with respect to 100 parts by mass in total of the (a) episulfide compound, the (b) sulfur, and the (c) cyclic compound.
[3] The composition for optical materials according to [1] or [2], further comprising (d) thiol compound.
[4] An optical material comprising a cured product of the composition for optical materials according to any one of [1] to [3].

### Advantageous Effects of Invention

According to the present invention, an optical material having excellent heat resistance can be obtained, and a homogeneous composition for optical materials can be easily obtained without performing a preliminary polymerization reaction.

### Description of Embodiments

Hereinafter, the present invention will be described in detail with reference to embodiments, examples, and the like, but the present invention is not limited to the following embodiments, examples, and the like, and can be carried out with any modifications without departing from the gist of the present invention.

### 1. Composition for optical materials

A composition for optical materials according to the present invention includes: (a) episulfide compound, (b) sulfur, and (c) cyclic compound represented by the following formula (1). At this time, a mass ratio (b/c) of the (b) sulfur to the (c) cyclic compound is 8 or less. A content of the (c) cyclic compound is less than 10 parts by mass with respect to 100 parts by mass in total of the (a) episulfide compound, the (b) sulfur, and the (c) cyclic compound.

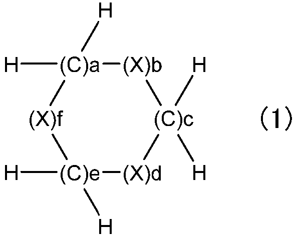

When the content of the (b) sulfur and the (c) cyclic compound in the composition for optical materials according to the present invention is controlled, a homogeneous composition for optical materials can be easily obtained without performing a preliminary polymerization reaction, and the obtained optical material is excellent in heat resistance. Note that, since the composition for optical materials is produced without performing a preliminary polymerization reaction, it does not include or is almost free of, for example, a preliminary polymerized product of the (a) episulfide compound and the (b) sulfur. Furthermore, in the present specification, "homogeneous" means a state in which the curing reaction (polymerization reaction) using the composition for optical materials occurs within a single phase, and preferably means the state of a homogeneous solution that contains no solid component. When the "presence or absence of solid component" in Examples is evaluated, the result of "∘" means that that composition for optical materials is "homogeneous".

### [(a) Episulfide compound]

The episulfide compound is not particularly limited, and examples thereof include episulfide compounds having a chain aliphatic skeleton, episulfide compounds having a cyclic aliphatic skeleton, and episulfide compounds having an aromatic skeleton.

Examples of the episulfide compounds having a chain aliphatic skeleton include compounds represented by the following formulas (2) to (5).

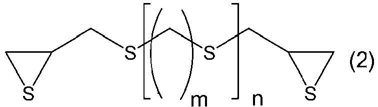

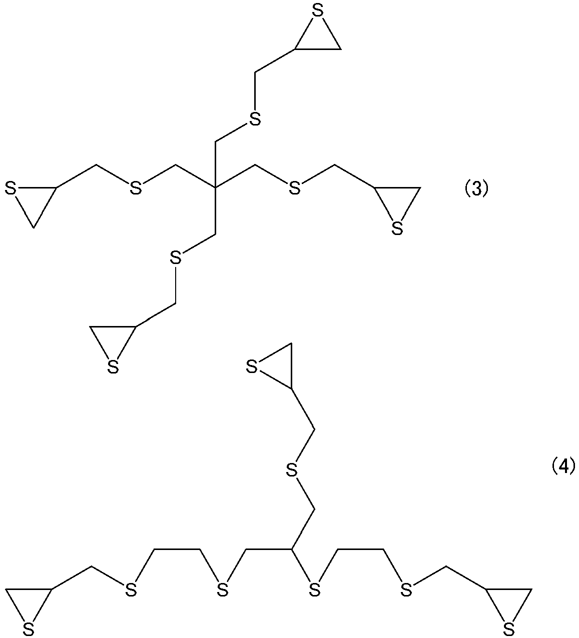

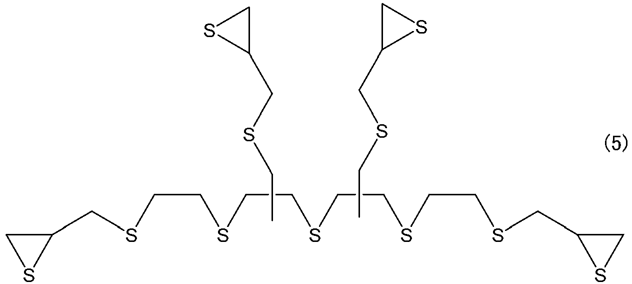

At this time, in the formula (2), m represents an integer of 0 to 4, preferably 0 to 2, and more preferably 0 or 1. In one embodiment, m is 0. In another embodiment, m is 1.

Furthermore, n represents an integer of 0 to 2, preferably 0 to 2, and more preferably 0 or 1. In one embodiment, n is 0. In another embodiment, n is 1.

Specific examples of the episulfide compounds having a chain aliphatic skeleton represented by the formula (2) include bis(β-epithiopropyl) sulfide, bis(β-epithiopropyl) disulfide, bis(β-epithiopropyl) trisulfide, bis(β-epithiopropylthio) methane, 1,2-bis(β-epithiopropylthio) ethane, 1,3-bis(β-epithiopropylthio) propane, 1,4-bis(β-epithiopropylthio) butane, and bis(β-epithiopropylthioethyl) sulfide.

Examples of the episulfide compounds having a cyclic aliphatic skeleton include the compounds represented by the following formulas (6) and (7).

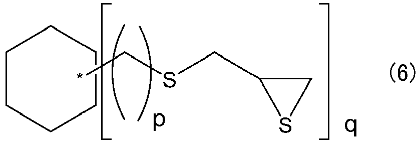

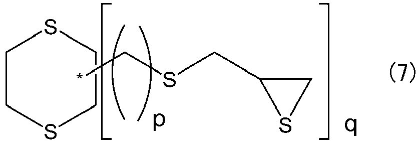

In the above formulas (6) and (7), p represents an integer of 0 to 4, preferably 0 to 2, and more preferably 0 or 1. In one embodiment, p is 0. In another embodiment, p is 1.

Furthermore, q represents an integer of 1 to 4, preferably 1 to 3, and more preferably 2 or 3. In one embodiment, q is 2. In another embodiment, q is 3.

Examples of the episulfide compounds having a cyclic aliphatic skeleton represented by the formula (6) include 1,3-bis(β-epithiopropylthio) cyclohexane, 1,4-bis(β-epithiopropylthio) cyclohexane, 1,3-bis(β-epithiopropylthiomethyl) cyclohexane, and 1,4-bis(β-epithiopropylthiomethyl) cyclohexane.

Examples of the episulfide compounds having a cyclic aliphatic skeleton represented by the formula (7) include 2,5-bis(β-epithiopropylthio)-1,4-dithiane, and 2,5-bis(β-epithiopropylthioethylthiomethyl)-1,4-dithiane.

Examples of the episulfide compounds having an aromatic skeleton include compounds represented by the following formula (8) and (9).

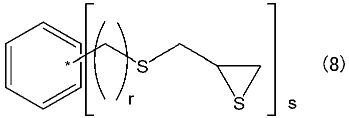

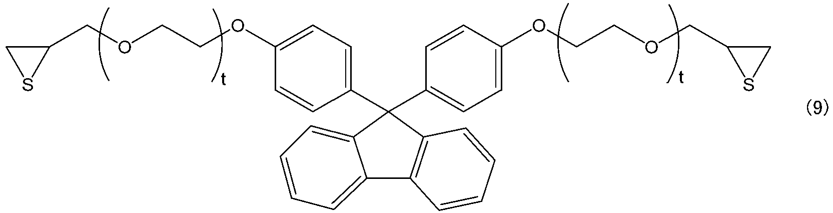

In the above formulas (8) and (9), r each independently represents an integer of 0 to 4, preferably 0 to 2, and more preferably 0 or 1. In one embodiment, r is 0. In another embodiment, r is 1.

Furthermore, s each independently represents an integer of 1 to 3, preferably 2 or 3. In one embodiment, s is 2. In another embodiment, s is 3.

Furthermore, t each independently represents an integer of 0 or 1. In one embodiment, s is 0. In another embodiment, s is 1.

Examples of the episulfide compounds having an aromatic skeleton represented by the formula (8) include 1,3-bis(β-epithiopropylthio) benzene, 1,4-bis(β-epithiopropylthio) benzene, 1,3-bis(β-epithiopropylthiomethyl) benzene, and 1,4-bis(β-epithiopropylthiomethyl) benzene.

Examples of the episulfide compounds having an aromatic skeleton represented by the formula (9) include 9,9-bis(4-(β-epithiopropyloxy)phenyl-1-yl) fluorene (two ts are 0), and 9,9-bis(4-(2-(β-epithiopropyloxy)ethoxy)phenyl-1-yl) fluorene (two ts are 1).

Among the above-described episulfide compounds, the episulfide compound preferably includes the episulfide compounds having a chain aliphatic skeleton, more preferably includes at least one of the compound represented by the formula (2) and the compound represented by the formula (3), still more preferably includes at least one selected from the group consisting of bis(β-epithiopropyl) sulfide, bis(β-epithiopropyl) disulfide, and the compound represented by the formula (3), particularly preferably includes at least one of bis(β-epithiopropyl) sulfide and bis(β-epithiopropyl) disulfide, and most preferably includes bis(β-epithiopropyl) sulfide. Note that, the above-described episulfide compound may be used alone or may be used in combination of two or more kinds thereof.

The content of the episulfide compound is preferably 30 to 95% by mass, more preferably 50 to 95% by mass, still more preferably 70 to 90% by mass, and particularly preferably 75 to 90% by mass, with respect to the total mass of the optical material composition.

In one embodiment, the content of the episulfide compound is preferably 30 to 95 parts by mass, more preferably 50 to 95 parts by mass, still more preferably 70 to 90 parts by mass, and particularly preferably 75 to 90 parts by mass, with respect to 100 parts by mass in total of the (a) episulfide compound, the (b) sulfur, and the (c) cyclic compound.

In one embodiment, when the optical material composition further includes the (d) thiol compound that will be described later, the content of the episulfide compound is preferably 30 to 95 parts by mass, more preferably 50 to 95 parts by mass, still more preferably 70 to 90 parts by mass, and particularly preferably 75 to 90 parts by mass, with respect to 100 parts by mass in total of the (a) episulfide compound, the (b) sulfur, the (c) cyclic compound, and the (d) thiol compound.

### [(b) Sulfur]

Sulfur has a function of improving the refractive index of the optical material, and the like.

Sulfur means a simple substance of sulfur having a unit structure of S8 sulfur, and a commercially available product thereof can be easily obtained.

The shape of sulfur is not particularly limited, and may be any shape. Specific examples of the shape include micronized sulfur, colloidal sulfur, precipitated sulfur, crystal sulfur, and sublimed sulfur. Among these, micronized sulfur is preferable from the viewpoint of the dissolution rate.

The particle size (diameter) of sulfur is preferably smaller than 10 mesh (mesh opening 1.70 mm), more preferably smaller than 30 mesh (mesh opening 500 µm), and still more preferably smaller than 60 mesh (mesh opening 250 µm). When the particle size of sulfur is smaller than 10 mesh, it is preferable because sulfur is easily dissolved.

The purity of sulfur is not particularly limited, but is preferably 98% or more, more preferably 99.0% or more, still more preferably 99.5% or more, and particularly preferably 99.9% or more. When the purity of sulfur is 98% or more, it is preferable because the obtained optical material can have a further improved color tone.

The content of sulfur is preferably 1 to 30% by mass, more preferably 3 to 20% by mass, still more preferably 8.2 to 15% by mass, and particularly preferably 9 to 15% by mass with respect to the total mass of the optical material composition. The content of sulfur falling within the above-mentioned range is preferable because an excellent balance between the effect of improving the refractive index and the solubility is achieved.

In one embodiment, the content of sulfur is preferably 1 to 30 parts by mass, more preferably 3 to 20 parts by mass, still more preferably 8.2 to 15 parts by mass, and particularly preferably 9 to 15 parts by mass, with respect to 100 parts by mass in total of the (a) episulfide compound, the (b) sulfur, and the (c) cyclic compound.

In one embodiment, when the optical material composition further includes the (d) thiol compound that will be described later, the content of sulfur is preferably 1 to 30 parts by mass, more preferably 3 to 20 parts by mass, still more preferably 8.2 to 15 parts by mass, and particularly preferably 9 to 15 parts by mass, with respect to 100 parts by mass in total of the (a) episulfide compound, the (b) sulfur, the (c) cyclic compound, and the (d) thiol compound.

### [(c) Cyclic compound]

The cyclic compound has a function of dissolving a solid such as sulfur contained in the optical material composition, a function of improving the refractive index of the optical material, and the like.

Inclusion of the cyclic compound makes it possible to obtain an optical material composition in the state of a homogeneous solution without performing a preliminary polymerization reaction (for example, polymerization reaction of sulfur and the episulfide compound) using solid components as raw materials at low temperatures (for example, 40°C or less).

Since the preliminary polymerization reaction is not required, problems resulting from the preliminary polymerized product obtained by the preliminary polymerization reaction do not occur. For example, the preliminary polymerized product has a higher solubility than solid components (sulfur, the cyclic compound, and the like) as raw materials, but the preliminary polymerized product cannot be described as having a sufficient solubility in some solvents, for example, a solvent (tetrahydrofuran, and the like) suitably used for cleaning pipes and the like. In this case, when a solvent such as tetrahydrofuran is used to clean pipes and the like, precipitations derived from the preliminary polymerized product are generated, and the precipitations may adhere to the pipes and the like. That is, when the optical material composition containing the preliminary polymerized product is produced, for example, a mixed solvent, in which N-methylpyrrolidone is mixed in tetrahydrofuran, needs to be used for cleaning pipes and the like, and the cleanability cannot be described as high. In contrast, since the optical material composition according to the present invention does not include or is almost free from the preliminary polymerized product, use of a solvent such as tetrahydrofuran can be used to clean pipes and the like. That is, the optical material composition according to the present invention may have a high cleanability.

The cyclic compound is represented by the following formula (1).

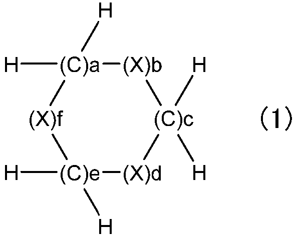

In the above formula (1), X each independently represents S, Se, or Te, and, from the viewpoint of ease of availability and high safety, preferably S or Se, and more preferably S.

In the formula (1), when it has two or more Xs, all two or more Xs may be the same or different, but all two or more Xs are preferably the same. In one embodiment, all Xs are preferably S. In another embodiment, all Xs are preferably Se. Furthermore, in another embodiment, all Xs are preferably Te.

a to f are each independently 0 to 3, with the proviso that 8 ≥(a+c+e) ≥1, 8 ≥(b+d+f) ≥2, and (b+d+f) ≥(a+c+e) are satisfied. From the viewpoint of further improving the refractive index of the optical material, a to f preferably satisfy 8 ≥(a+c+e) ≥1 and 7 ≥(b+d+f) ≥2, more preferably satisfy 5 ≥(a+c+e) ≥1 and 7 ≥(b+d+f) ≥2, and still more preferably satisfy 5 ≥(a+c+e) ≥1, 7 ≥(b+d+f) ≥2, and (b+d+f) ≥(a+c+e).

In one embodiment, (b+d+f) ≥(a+c+e) is preferably satisfied.

In one embodiment, the total mass of S, Se, and Te in the cyclic compound is preferably 50% by mass or more with respect to the total mass of the cyclic compound from the viewpoint of further improving the refractive index of the optical material.

Specific examples of the cyclic compound include, but are not limited, dithiirane, 1,2-dithietane, 1,3-dithietane, trithietane, 1,2-dithiolane, 1,3-dithiolane, 1,2,3-trithiolane, 1,2,4-trithiolane, tetrathiolane, 1,2-dithiane, 1,3-dithiane, 1,4-dithiane, 1,2,3-trithiane, 1,2,4-trithiane, 1,3,5-trithiane, 1,2,3,4-tetrathiane, 1,2,4,5-tetrathiane, bis(1,2,3,5,6-pentathiepano) methane, tris(1,2,3,5,6-pentathiepano) methane, 1,2-dithiepane, 1,3-dithiepane, 1,4-dithiepane, 1,2,3-trithiepane, 1,2,4-trithiepane, 1,2,5-trithiepane, 1,3,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, hexathiepane, diselecyclobutane, triselecyclobutane, diselecyclopentane, triselecyclopentane, tetraselecyclopentane, diselecyclohexane, triselecyclohexane, tetraselecyclohexane, pentaselecyclohexane, diselecycloheptane, triselecycloheptane, tetraselecycloheptane, pentaselecycloheptane, hexaselecycloheptane, ditellurocyclobutane, tritellurocyclobutane, ditellurocyclopentane, tritellurocyclopentane, tetratellurocyclopentane, ditellurocyclohexane, tritellurocyclohexane, tetratellurocyclohexane, pentatellurocyclohexane, ditellurocycloheptane, tritellurocycloheptane, tetratellurocycloheptane, pentatellurocycloheptane, hexatellurocycloheptane, and derivatives having these cyclic skeleton structures (compounds in which various substituents are changed in place of a hydrogen atom). At this time, the substituent that may be substituted with a hydrogen atom of the cyclic compound is not particularly limited, and examples thereof include alkyl groups having 1 to 10 carbon atoms (a methyl group, an ethyl group, a propyl group, an isopropyl group, a butyl group, an isobutyl group, a sec-butyl group, a tert-butyl group, and the like), alkoxy groups having 1 to 10 carbon atoms (a methoxy group, an ethoxy group, a propyloxy group, an isopropyloxy group, a tert-butoxy group, and the like), and halogen atoms (fluorine atom, chlorine atom, bromine atom, iodine atom, and the like). It may have only one kind of these substituents or may have two or more kinds thereof in combination.

Among the above, from the viewpoint of ease of availability and synthesis and further improvement of the refractive index of the optical material, the cyclic compound preferably includes at least one selected from the group consisting of 1,2-dithietane, trithietane, 1,2-dithiolane, 1,2,3-trithiolane, 1,2,4-trithiolane, tetrathiolane, 1,2-dithiane, 1,2,3-trithiane, 1,2,4-trithiane, 1,3,5-trithiane, 1,2,3,4-tetrathiane, 1,2,4,5-tetrathiane, pentathiane, 1,2,3-trithiepane, 1,2,4-trithiepane, 1,2,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane, hexathiepane, and derivatives having these cyclic skeleton structures (including various substituents in place of a hydrogen atom), and more preferably includes at least one of 1,2,4,5-tetrathiane and 1,2,3,5,6-pentathiepane. The cyclic compound may be used alone or may be used in combination of two or more kinds thereof.

A method for obtaining the cyclic compound is not particularly limited, and a commercially available product may be used, the cyclic compound may be collected and extracted from natural products such as crude oil, animals and plants, and the like or may be synthesized by a known method. Examples of the method for synthesizing the cyclic compound include, for example, N. Takeda et al., Bull. Chem. Soc. Jpn., 68, 2757 (1995), F. Feher et al., Angew. Chem. Int. Ed., 7, 301 (1968), G.W. Kutney et al., Can. J. Chem, 58, 1233 (1980).

The content of the cyclic compound is less than 10% by mass, and, from the viewpoint of dissolving solid components to easily obtain a homogeneous solution, preferably 1.1 to 9.5% by mass, more preferably 1.8 to 9% by mass, still more preferably 1.8 to 7% by mass, and particularly preferably 3 to 7% by mass, with respect to the total mass of the optical material composition.

In one embodiment, the content of the cyclic compound is less than 10 parts by mass, and, from the viewpoint of dissolving solid components to easily obtain a homogeneous solution, preferably 1.1 to 9.5 parts by mass, more preferably 1.8 to 9 parts by mass, still more preferably 1.8 to 7 parts by mass, and particularly preferably 3 to 7 parts by mass, with respect to 100 parts by mass in total of the (a) episulfide compound, the (b) sulfur, and the (c) cyclic compound. When the content of the cyclic compound is less than 10 parts by mass, a decrease in the heat resistance due to the cyclic compound can be suppressed.

In one embodiment, when the optical material composition further includes the (d) thiol compound that will be described later, the content of the cyclic compound is less than 10 parts by mass, and, from the viewpoint of dissolving solid components to easily obtain a homogeneous solution, preferably 1.1 to 9.5 parts by mass, more preferably 1.8 to 9 parts by mass, still more preferably 1.8 to 7 parts by mass, and particularly preferably 3 to 7 parts by mass, with respect to 100 parts by mass in total of the (a) episulfide compound, the (b) sulfur, the (c) cyclic compound, and the (d) thiol compound.

The mass ratio (b/c) of the (b) sulfur to the (c) cyclic compound is 8 or less, preferably 0.5 to 8, and more preferably 0.5 to 7, and, from the viewpoint of further increasing the refractive index, still more preferably 1.2 to 8, and particularly preferably 1.2 to 7. The mass ratio (b/c) of 8 or less is preferable because the (b) sulfur can be suitably dissolved in the optical material composition due to an action of the (c) cyclic compound.

The total content of the (b) sulfur and the (c) cyclic compound is preferably 9 to 30% by mass, more preferably 9 to 20% by mass, still more preferably 10 to 20% by mass, and particularly preferably 12 to 18% by mass, with respect to the total mass of the optical material composition.

The total content of the (b) sulfur and the (c) cyclic compound is preferably 9 to 30 parts by mass, more preferably 9 to 20 parts by mass, still more preferably 10 to 20 parts by mass, and particularly preferably 12 to 18 parts by mass, with respect to 100 parts by mass in total of the (a) episulfide compound, the (b) sulfur, and the (c) cyclic compound. The total content falling within the above range is preferable because the (b) sulfur is dissolved in the optical material composition to easily obtain a homogeneous solution, the obtained optical material has high heat resistance, and a refractive index of the optical material may be increased.

In one embodiment, when the optical material composition further includes the (d) thiol compound that will be described later, the total content of the (b) sulfur and the (c) cyclic compound is preferably 9 to 30 parts by mass, more preferably 9 to 20 parts by mass, still more preferably 10 to 20 parts by mass, and particularly preferably 12 to 18 parts by mass, with respect to 100 parts by mass in total of the (a) episulfide compound, the (b) sulfur, the (c) cyclic compound, and the (d) thiol compound.

### [(d) Thiol compound]

In one embodiment, the composition for optical materials preferably further includes a thiol compound. The thiol compound has a function of making the color tone of the optical material good, and the like. Note that, in the present specification, the "thiol compound" means a compound having one or more thiol groups (-SH) in the molecule. The thiol compound may further have an episulphide group. Note that, when the compound having an episulphide group further has a thiol group, it corresponds to the "(d) thiol compound". When it does not have a thiol group, it corresponds to the "(a) episulfide compound".

The thiol compound is not particularly limited, and examples thereof include methanedithiol, (sulfanylmethyldisulfanyl) methanethiol, bis(2-mercaptoethyl) sulfide, 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio) propane, 1,2,6,7-tetramercapto-4-thiaheptane, tetramercaptopentaerythritol, 1,3-bis(mercaptomethyl) benzene, 1,4-bis(mercaptomethyl) benzene, and thiiranemethanethiol. Among these, the thiol compound preferably includes at least one selected from the group consisting of methanedithiol, (sulfanylmethyldisulfanyl) methanethiol, bis(2-mercaptoethyl) sulfide, 2,5-bis(mercaptomethyl)-1,4-dithiane, 1,2-bis(2-mercaptoethylthio)-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,2,6,7-tetramercapto-4-thiaheptane, tetramercaptopentaerythritol, 1,3-bis(mercaptomethyl) benzene, and thiiranemethanethiol, from the viewpoint of ease of availability and the like. Note that, the above thiol compounds may be used alone or may be used in combination of two or more kinds thereof.

The content of the thiol compound is preferably 0.1 to 15% by mass, and more preferably 0.5 to 12% by mass, and, from the viewpoint of preventing roughness on the surface of the optical member, still more preferably 1 to 10% by mass, and particularly preferably 2 to 5% by mass, with respect to the total mass of the optical material composition.

In one embodiment, the content of the thiol compound is preferably 0.1 to 15 parts by mass and more preferably 0.5 to 12 parts by mass, and, from the viewpoint of preventing roughness on the surface of the optical member, still more preferably 1 to 10 parts by mass, and particularly preferably 2 to 5 parts by mass, with respect to 100 parts by mass in total of the (a) episulfide compound, the (b) sulfur, and the (c) cyclic compound.

In one embodiment, the content of the thiol compound is preferably 0.1 to 15 parts by mass and more preferably 0.5 to 12 parts by mass, and, from the viewpoint of preventing roughness on the surface of the optical member, still more preferably 1 to 10 parts by mass and particularly preferably 2 to 5 parts by mass, with respect to 100 parts by mass in total of the (a) episulfide compound, the (b) sulfur, the (c) cyclic compound, and the (d) thiol compound.

### [Polymerizable compound]

In one embodiment, the composition for optical materials may further include a polymerizable compound. The polymerizable compound has a function of adjusting physical properties of the optical material, and the like. In the present specification, the "polymerizable compound" means a compound having a polymerizable functional group other than the (a) episulfide compound, the (b) sulfur, the (c) cyclic compound, and the (d) thiol compound.

The polymerizable compound is not particularly limited, and examples thereof include vinyl compounds, methacrylic compounds, acrylic compounds, and allyl compounds. These compounds may be used alone or may be used in combination of two or more kinds thereof.

The amount of the polymerizable compound added may be appropriately adjusted depending on the desired physical properties of the optical material.

### [Polymerization catalyst]

In one embodiment, the composition for optical materials may further include a polymerization catalyst. Inclusion of the polymerization catalyst makes it possible to suitably polymerize the composition for optical materials to produce an optical material.

The polymerization catalyst is not particularly limited, and examples thereof include amines, phosphines, onium salts (quaternary ammonium salts, quaternary phosphonium salts, tertiary sulfonium salts, secondary iodonium salts, and the like), and phosphine compounds.

Examples of the quaternary ammonium salts include tetra-n-butylammonium bromide, tetraphenylammonium bromide, triethylbenzylammonium chloride, cetyldimethylbenzylammonium chloride, and 1-n-dodecylpyridinium chloride.

Examples of the quaternary phosphonium salts include tetra-n-butylphosphonium bromide and tetraphenylphosphonium bromide.

Examples of the phosphine compounds include triphenylphosphine.

The above-described polymerization catalyst preferably includes at least one selected from the group consisting of quaternary ammonium salts, quaternary phosphonium salts, and phosphine compounds, more preferably includes a quaternary ammonium salt, and still more preferably includes at least one of triethylbenzylammonium chloride and tetra-n-butylphosphonium bromide. The above-described polymerization catalyst may be used alone or may be used in combination of two or more kinds thereof.

The amount of the polymerization catalyst added is different depending on the components, the mixing ratio, the curing method of the composition for optical materials, and the like, but is preferably 0.0001 to 10.0% by mass, and, from the viewpoint of improving the refractive index and heat resistance of the optical material and preventing coloring and the like, more preferably 0.0005 to 5.0% by mass and still more preferably 0.01 to 3% by mass, with respect to the total mass of the composition for optical materials.

### [Polymerization modifier]

In one embodiment, the composition for optical materials may further include a polymerization modifier.

The polymerization modifier is not particularly limited, and examples thereof include halides of Groups 13 to 16 in the long-form periodic table and ketone compounds having halogen at an α position.

Examples of the halides of Groups 13 to 16 in the long-form periodic table include halides of silicon, germanium, tin, and antimony, and more preferable examples thereof include chlorides of germanium, tin, and antimony having an alkyl group. Specific examples of the halides of Groups 13 to 16 in the long-form periodic table include dibutyltin dichloride, butyltin trichloride, dioctyltin dichloride, octyltin trichloride, dibutyldichlorogermanium, butyltrichlorogermanium, diphenyldichlorogermanium, phenyltrichlorogermanium, and triphenylantimony dichloride.

Examples of the ketone compounds having halogen at an α position include dimethyl chloromalonate and diethyl chloromalonate.

The above-described polymerization modifiers may be used alone or may be used in combination of two or more kinds thereof.

The content of the polymerization modifier is preferably 0.0005 to 5% by mass and more preferably 0.0001 to 3 parts by mass with respect to the total mass of the composition for optical materials.

### [Additives]

In one embodiment, the composition for optical materials may further include additives.

Examples of the additives include, for example, antioxidants, ultraviolet absorbers, bluing agents, adhesion improvers, and release agents.

The antioxidant is not particularly limited, and examples thereof include phenol derivatives. Examples of the phenol derivatives include polyhydric phenols such as catechol, pyrogallol, and alkyl-substituted catechol, and halogen-substituted phenols. Among these, the antioxidant is preferably catechol, pyrogallol.

The ultraviolet preventing agent is not particularly limited, and examples thereof include benzotriazole-based compounds. Examples of the benzotriazole-based compounds include 2-(2-hydroxy-5-methylphenyl)-2H-benzotriazole, 5-chloro-2-(3,5-di-tert-butyl-2-hydroxyphenyl)-2H-benzotriazole, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, 2-(2-hydroxy-4-octyloxyphenyl)-2H-benzotriazole, 2-(2-hydroxy-4-butyloxyphenyl)-2H-benzotriazole, and 2-(2-hydroxy-5-tert-octylphenyl)-2H-benzotriazole.

The bluing agent is not particularly limited, and examples thereof include anthraquinone-based compounds.

The adhesion improver is not particularly limited, and examples thereof include silane coupling agents and titanate compounds. Note that, in the case where the composition for optical materials is charged into a mold to be cured, when a cured product is easily released from the mold, the adhesion improver has a function of improving adhesion between the cured product and the mold, and the like.

The release agent is not particularly limited, and examples thereof include fluorine-based nonionic surfactants, silicon-based nonionic surfactants, phosphate esters, acidic phosphate esters, oxyalkylene-type acidic phosphate esters, alkali metal salts of acidic phosphate esters, alkali metal salts of oxyalkylene-type acidic phosphate esters, alkali metal salts of higher fatty acids, higher fatty acid esters, paraffin, waxes, higher aliphatic amides, higher aliphatic alcohols, polysiloxanes, and aliphatic amine ethylene oxide adducts. Note that, in the case where the composition for optical materials is charged into a mold to be cured, when a cured product is less likely to be released from the mold, the release agent has a function of controlling adhesion between the cured product and the mold to easily release the cured product from the mold (improving the releasability), and the like.

The above-mentioned additives may be used alone or may be used in combination of two or more kinds thereof.

The content of each additive is not particularly limited, and is preferably 0.0001 to 5% by mass, with respect to the total mass of the composition for optical materials.

### 2. Production method of composition for optical materials

The composition for optical materials is not particularly limited, and can be produced by a known method. For example, (a) episulfide compound, (b) sulfur, and (c) cyclic compound, and, if necessary, (d) thiol compound, a polymerization catalyst, a polymerization modifier, and additives can be mixed to produce the composition for optical materials.

The mixing temperature is not particularly limited, and is preferably 40°C or less, and more preferably 10 to 40°C. When the mixing temperature is 40°C or less, since the properties of the (b) sulfur and the (c) cyclic compound are solid, the solid may remain in the conventional composition for optical materials even when the mixing is performed at the above-described mixing temperature. However, according to the present invention, since the (b) sulfur and the (c) cyclic compound are suitably dissolved in the composition for optical materials, even when the mixing temperature is 40°C or less, it is possible to easily produce the composition for optical materials in the state of a homogeneous solution, preferably the state of a homogeneous solution in which no solid component is contained, without performing a preliminary polymerization reaction.

Note that, impurities and the like in the raw materials before mixing and/or the produced composition for optical materials are preferably filtered and purified through a filter. At this time, the pore size of the filter is preferably 0.05 to 10 µm.

### 3. Optical material

According to one embodiment of the present invention, an optical material is provided. The optical material includes a cured product of the above-described composition for optical materials.

The composition for optical materials is the state of a homogeneous solution, preferably the state of a homogeneous solution in which no solid component is contained, and the curing reaction can proceed homogeneously in the system. Therefore, the optical material is excellent in heat resistance. In addition, since the composition for optical materials includes the (a) episulfide compound, the (b) sulfur, and the like, the optical material is excellent in the refractive index.

In one embodiment, the refractive index of the optical material is preferably 1.700 or more, more preferably 1.720 or more, still more preferably 1.730 or more, and particularly preferably 1.733 or more. Note that, the refractive index of the optical material is measured by the method described in Examples.

### 4. Production method of optical material

According to one embodiment of the present invention, the production method of the optical material is provided. The production method of the optical material includes a curing step of curing the above-described composition for optical materials. Before the curing step, a degassing step may be further included.

### [Degassing step]

The degassing step is a step of performing a degassing treatment of the above-described composition for optical materials. Performing the degassing treatment can increase the quality of the obtained optical material.

The degassing treatment can be performed by disposing the composition for optical materials in an atmosphere under reduced pressure.

The degree of pressure reduction of the degassing treatment is preferably 0.001 to 100 torr, more preferably 0.001 to 100 torr, still more preferably 0.005 to 50 torr, and particularly preferably 0.01 to 50 torr.

The temperature of the degassing treatment is preferably 0°C to 40°C, more preferably 5°C to 40°C, and still more preferably 10°C to 40°C.

The time of the degassing treatment is preferably 1 minute to 24 hours, more preferably 5 minutes to 18 hours, and still more preferably 10 minutes to 12 hours.

In one embodiment, the pressure reduction treatment is preferably performed under reduced pressure of 0.001 to 100 torr for 1 minute to 24 hours at 0°C to 40°C, more preferably performed under reduced pressure of 0.005 to 50 torr for 5 minutes to 18 hours at 5°C to 40°C, and still more preferably performed under reduced pressure of 0.01 to 50 torr for 10 minutes to 12 hours at 10°C to 40°C.

### [Curing step]

The curing step is a step of curing the above-described composition for optical materials.

The curing step is typically performed by injecting a composition for optical materials into a mold formed of glass, metal, or the like, and curing the composition for optical materials with heat or by irradiation of active energy rays such as ultraviolet rays (performing the curing reaction of the components in the composition for optical materials). After curing, the cured product can be removed from the mold, to produce the optical material.

The curing temperature is preferably -10 to 160°C, and more preferably -10 to 140°C.

The curing time is preferably 0.1 to 200 hours, and more preferably 1 to 100 hours. Note that, when the curing step includes a temperature increase step and a temperature decrease step that will be described later, the time that includes the time of a step of increasing the temperature and the time of a step of decreasing the temperature is the curing time.

The curing step may include the temperature increase step, a curing temperature maintaining step, and the temperature decrease step. At this time, the temperature increase rate of the temperature increase step is preferably 0.1 to 100°C/hour. In addition, the temperature decrease of the temperature decrease step is preferably 0.1 to 100°C/hour. In one embodiment, the curing step includes a step of increasing the temperature to a first curing temperature, a step of maintaining the temperature at the first curing temperature, a step of increasing the temperature to a second curing temperature, a step of maintaining the temperature at the second curing temperature, and a step of decreasing the temperature. In another embodiment, in one embodiment, the polymerization step includes a step of increasing the temperature to a first curing temperature, a step of maintaining the temperature at the first curing temperature, a step of increasing the temperature to a second curing temperature, a step of maintaining the temperature at the second curing temperature, and a step of decreasing the temperature.

After the curing, the obtained optical material is preferably subjected to an annealing treatment. By performing the annealing treatment, distortion of the optical material can be prevented or reduced. The temperature of the annealing treatment is preferably 50 to 150°C. The time of the annealing treatment is preferably 10 minutes to 5 hours.

The obtained optical material may be optionally subjected to surface treatment such as dyeing, hard coating, impact resistance coating, antireflection, and imparting of antifogging properties.

### <Application of optical material>

The above-mentioned optical material is useful for various applications such as optical members, mechanical component materials, electrical and electronic component materials, automobile component materials, civil engineering and construction materials, molding materials, as well as materials of paints and adhesives. The optical material is suitably used for, among these, optical applications including lenses such as spectacle lenses, imaging lenses for (digital) cameras, light beam condensing lenses, and light diffusion lenses, LED encapsulants, optical adhesives, joining materials for optical transmission, optical fibers, prisms, filters, diffraction gratings, and transparent glass and cover glass such as watch glass, and cover glass for display devices; and display device applications including substrates for display elements such as LCDs, organic ELs, and PDPs, substrates for color filters, substrates for touch panels, information recording substrates, display backlights, light guide plates, and coating agents (coating films) such as display protective films, antireflection films, and antifogging films. In particular, the optical material is preferably used for applications such as optical lenses, prisms, optical fibers, information recording substrates, and filters, and more preferably used for an optical lens. That is, in one embodiment, an optical lens containing the above-mentioned optical material is provided.

### Examples

Hereinafter, the present invention will be described in more detail by way of Examples, but the present invention is not limited to thereto.

### [Example 1]

81.6 parts by mass of bis(β-epithiopropyl) sulfide as (a) episulfide compound, 12.8 parts by mass of (b) sulfur, and 1.6 parts by mass of 1,2,3,5,6-pentathiepane as (c) cyclic compound were stirred under reduced pressure of 30 torr at 40°C until the solids were dissolved.

To the obtained mixed solution, 4 parts by mass of bis(2-mercaptoethyl) sulfide as (d) thiol compound (also referred to as "d-1 compound"), 0.05 parts by mass of triethylbenzylammonium chloride as a polymerization catalyst, and 0.15 parts by mass of dibutyltin dichloride as a polymerization modifier were further added, stirred under reduced pressure of 30 torr at 40°C, and filtered through a PTFE filter of 1 µm, to produce an optical material composition. Note that, the total amount of (a) to (d) added is 100 parts by mass.

### [Examples 2 to 8 and Comparative Examples 1 to 3]

An optical material composition was produced in the same manner as in Example 1 except that the composition and the mixing temperature of the optical material composition was changed as those described in Table 1. Note that, the d-2 compound is 1,2-bis(2-mercaptoethylthio)-3-mercaptopropane.

The structural formulas of the compounds used in Examples and Comparative Examples are as follows.

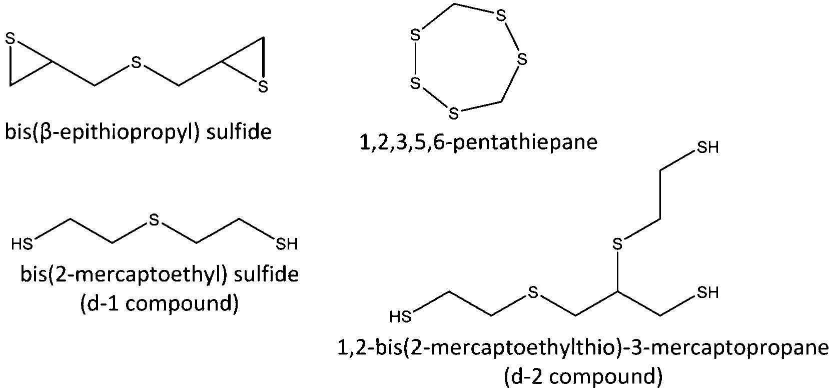

**[Table 1]**

| | (a) Episulfide compound | (b) Sulfur | (c) Cyclic compound | (d) Thiol compound | | (b)/(c) | (b)+(c) (Parts by mass) | Mixing temperature (°C) |
|---|---|---|---|---|---|---|---|---|
| | Content (Parts by mass) | Content (Parts by mass) | Content (Parts by mass) | Kind | Content (Parts by mass) | | | |
| Example 1 | 81.6 | 12.8 | 1.6 | d-1 | 4 | 8 | 14.4 | 40 |
| Example 2 | 82.4 | 12.2 | 2.4 | d-1 | 3 | 5 | 14.6 | 40 |
| Example 3 | 90.27 | 8.11 | 1.62 | - | 0 | 5 | 9.73 | 40 |
| Example 4 | 70.88 | 20.93 | 4.19 | d-1 | 4 | 5 | 25.12 | 40 |
| Example 5 | 82 | 11.7 | 3.3 | d-1 | 3 | 3.5 | 15 | 40 |
| Example 6 | 79.58 | 9.85 | 6.57 | d-1 | 4 | 1.5 | 16.42 | 30 |
| Example 7 | 79.58 | 9.85 | 6.57 | d-2 | 4 | 1.5 | 16.42 | 30 |
| Example 8 | 79.33 | 8.335 | 8.335 | d-2 | 4 | 1 | 16.67 | 25 |
| Comparative Example 1 | 85 | 15 | 0 | - | 0 | - | 15 | 40 |
| Comparative Example 2 | 86 | 13 | 1 | - | 0 | 12 | 14 | 40 |
| Comparative Example 3 | 76.1 | 5 | 14.9 | d-1 | 4 | 0.33 | 19.9 | 25 |

### [Evaluation]

Various evaluations were performed on the optical material compositions produced in Examples 1 to 8 and Comparative Examples 1 to 3.

### (1) Evaluation of optical material composition

The presence or absence of solid component and the cleanability of the optical material compositions were evaluated.

### [Presence or absence of solid component]

Whether the solid component remained in the optical material composition heated to 40°C was visually confirmed and was evaluated based on the following criteria. When no solid component remains in the optical material composition, the optical material composition can be described as homogeneous. The obtained results are shown in the following Table 2.
∘: No solid component remains.
×: Solid components remain.

### [Cleanability]

350 g of the optical material composition was added to a 500 mL glass flask and the optical material composition was stirred for 10 minutes. Thereafter, the glass flask was then tilted so that the opening thereof was vertically downward to discharge the optical material composition from the glass flask. In that condition, the inside of the glass flask was then cleaned with 100 mL of tetrahydrofuran.

Deposits on the observed surface of the cleaned glass flask were visually observed and were evaluated based on the following criteria. Note that, when solid components remained in the optical material composition, which was considered unevaluable and was marked with a "-". When deposits are not found on the observed surface of the cleaned glass flask, the optical material composition is easily cleaned and is excellent in the handling property. The obtained results are shown in the following Table 2.
∘: There is no deposit on the observed surface of the glass flask.
×: There are deposits on the observed surface of the glass flask.

### (2) Evaluation of optical material

From the optical material composition, an optical material was produced, and the heat resistance and the refractive index of the optical material were evaluated.

### [Production of optical material]

10 g of the optical material composition was injected into a lens mold and was heated at 30°C for 10 hours. Thereafter, the temperature was then increased to 60°C over 3 hours, heated at 60°C for 7 hours, then increased to 100°C over 4 hours, heated at 100°C for 3 hours, and polymerize and harden the optical material composition to produce the optical material. As a result, an optical material was produced.

### [Heat resistance]

The optical material was cut to prepare measurement samples (length: 2.5 mm, width: 5 mm, thickness: 3 mm). The measurement samples and a thermomechanical analysis (TMA) apparatus TMA7100 (available from Hitachi High-Tech Science Corporation) were used to measure a softening point (Tg) to perform the evaluation according to the following criteria. Note that, when solid components remained in the optical material composition, which was considered unevaluable and was marked with a "-". During TMA, 10 g of a load was applied to a pin having a diameter of 0.5 mm, and the temperature was increased from 25°C at a rate of 5°C/min. It can be said that an optical material has excellent physical properties when it has high heat resistance. The obtained results are shown in the following Table 2.
∘: The softening point is 60°C or more.
×: The softening point is less than 60°C.

### [Refractive index]

A digital precision refractive index meter KPR-3000 (available from Shimadzu Corporation) was used to measure a refractive index for the e-line at 25°C. It can be said that the optical material has excellent optical properties when it has a high refractive index. Note that, when solid components remained in the optical material composition, which was considered unevaluable and was marked with a "-". The obtained results are shown in the following Table 2.

**[Table 2]**

| | Evaluation of optical material composition | | Evaluation of optical material | |
|---|---|---|---|---|
| | Presence or absence of solid component | Cleanability | Heat resistance | Refractive index |
| Example 1 | ○ | ○ | ○ | 1.735 |
| Example 2 | ○ | ○ | ○ | 1.735 |
| Example 3 | ○ | ○ | ○ | 1.730 |
| Example 4 | ○ | ○ | ○ | 1.755 |
| Example 5 | ○ | ○ | ○ | 1.735 |
| Example 6 | ○ | ○ | ○ | 1.735 |
| Example 7 | ○ | ○ | ○ | 1.736 |
| Example 8 | ○ | ○ | ○ | 1.735 |
| Comparative Example 1 | × | - | - | - |
| Comparative Example 2 | × | - | - | - |
| Comparative Example 3 | ○ | ○ | × | 1.735 |

From the results of Table 2, it was found that, in Examples 1 to 8, homogeneous compositions for optical materials can be easily produced without performing a preliminary polymerization reaction. It was found that the optical materials obtained from the compositions for optical materials of Examples 1 to 8 have excellent heat resistance. In addition, it was found that the compositions for optical materials of Examples 1 to 8 have excellent cleanability and the obtained optical materials have a high refractive index.

## Claims

1. A composition for optical materials comprising:
(a) episulfide compound, (b) sulfur, and (c) cyclic compound represented by the following formula (1): 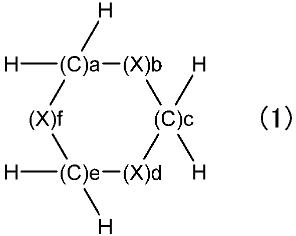 wherein, in the formula (1),
X each independently represents S, Se, or Te, and
a to f are each independently 0 to 3,
with the proviso that 8 ≥ (a+c+e) ≥1, 8 ≥(b+d+f) ≥2, and (b+d+f) ≥(a+c+e) are satisfied,
wherein a mass ratio (b/c) of the (b) sulfur to the (c) cyclic compound is 8 or less, and
a content of the (c) cyclic compound is less than 10 parts by mass with respect to 100 parts by mass in total of the (a) episulfide compound, the (b) sulfur, and the (c) cyclic compound.

2. The composition for optical materials according to claim 1,wherein a total content of the (b) sulfur and the (c) cyclic compound is 9 to 30 parts by mass with respect to 100 parts by mass in total of the (a) episulfide compound, the (b) sulfur, and the (c) cyclic compound.

3. The composition for optical materials according to claim 1, further comprising (d) thiol compound.

4. An optical material comprising a cured product of the composition for optical materials according to any one of claims 1 to 3.
